(19) Europäisches Patentamt
European Patent Office
Office européen des brevets

(11) **EP 2 125 280 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(51) Int Cl.:
***B23K 7/10*** *(2006.01)*　　***B23K 10/00*** *(2006.01)*
***B23K 9/12*** *(2006.01)*　　***B23Q 17/22*** *(2006.01)*

(21) Anmeldenummer: **07821430.1**

(22) Anmeldetag: **17.10.2007**

(86) Internationale Anmeldenummer:
**PCT/EP2007/061065**

(87) Internationale Veröffentlichungsnummer:
**WO 2008/071487 (19.06.2008 Gazette 2008/25)**

(54) **VORRICHTUNG ZUM BEARBEITEN VON WERKSTÜCKEN**

DEVICE FOR MACHINING WORKPIECES

DISPOSITIF POUR USINER DES PIÈCES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **15.12.2006 DE 102006059784**

(43) Veröffentlichungstag der Anmeldung:
**02.12.2009 Patentblatt 2009/49**

(73) Patentinhaber: **IHT Automation GmbH & Co. KG**
**76532 Baden-Baden (DE)**

(72) Erfinder: **HECK, Bruno**
**76448 Durmersheim (DE)**

(74) Vertreter: **Reule, Hanspeter et al**
**Lessingstrasse 12**
**76530 Baden-Baden (DE)**

(56) Entgegenhaltungen:
**WO-A-2006/024338　　DE-U1- 8 713 968**
**FR-A- 2 690 244　　US-A- 5 371 336**

**Beschreibung**

Die Erfindung betrifft eine Vorrichtung zum Bearbeiten, insbesondere zum Schneiden, von elektrisch leitfähigen Werkstücken gemäß Oberbegriff des Anspruchs 1.

Eine solche Bearbeitungsvorrichtung, die dem Schneiden von Blechen mittels eines Plasmaschneidbrenners dient, ist aus der DE-102004042135 A1 bekannt. Bei dieser Vorrichtung wird der Abstand zwischen dem Plasmaschneidbrenner und dem Blech durch eine eine Antriebseinheit ansteuernde Datenverarbeitungseinheit geregelt. Als den Abstand charakterisierende Kenngröße dient die Kapazität, die durch eine gegenüber den übrigen Bauteilen des Plasmaschneidbrenners elektrisch isolierte Düsenkappe und das Blech gebildet wird. Diese ist abhängig vom Abstand der Düsenkappe vom Blech und ist einem elektrischen Schwingkreis parallel geschaltet, dessen Resonanzfrequenz von der Datenverarbeitungseinheit zeitabhängig ausgewertet wird. Die vorbekannte Vorrichtung hat sich in der Praxis bereits gut bewährt. Allerdings ist die Abstandsmessung unter bestimmten äußeren Bedingungen Störeinflüssen ausgesetzt, die die Genauigkeit der Abstandsregelung beeinflussen können.

Es ist daher Aufgabe der Erfindung, eine Vorrichtung der eingangs genannten Art derart weiterzubilden, dass äußere Störeinflüsse besser unterdrückt werden können.

Die Aufgabe wird erfindungsgemäß durch eine Vorrichtung mit den Merkmalen des Anspruchs 1 gelöst. Vorteilhafte Weiterbildungen sind Gegenstand der abhängigen Ansprüche.

Der Erfindung liegt der Gedanke zugrunde, dass die zweite Kapazität mit der ersten Kapazität in Reihe geschaltet ist. Dabei wurde experimentell gefunden, dass eine solche Reihenschaltung die Anordnung unempfindlicher gegen äußere Störeinflüsse macht. Im Gegensatz zur ersten Kapazität ändert sich die zweite Kapazität bei einer Bewegung des Werkzeugs nicht oder nur unwesentlich.

Gemäß einer ersten vorteilhaften Ausführungsform ist vorgesehen, dass die Auswerteeinheit einen zur ersten und zweiten Kapazität parallel geschalteten elektrischen Schwingkreis sowie eine Datenverarbeitungseinheit zur Auswertung der Resonanzfrequenz des Schwingkreises aufweist. Gemäß einer zweiten vorteilhaften Ausführungsform weist die Auswerteeinheit eine elektrische Spannungsquelle sowie eine Datenverarbeitungseinheit zur Auswertung einer Be- und/oder Entladezeit der beiden Kapazitäten auf.

Das Verbindungselement und der Werkzeugkopf können prinzipiell im Abstand zueinander angeordnet und durch einen Luftspalt getrennt sein. Zweckmäßig ist jedoch zwischen dem Werkzeugkopf und dem Verbindungselement ein Dielektrikum angeordnet. Da die Ersatzkapazität C für eine Reihenschalten zweier Kapazitäten $C_1$ und $C_2$ sich gemäß der Formel

$$\frac{1}{C} = \frac{1}{C_1} + \frac{1}{C_2}$$ berechnet, fällt bei Verwendung eines Dielektrikums, das die zweite Kapazität deutlich vergrößert, diese nicht so stark ins Gewicht wie die erste Kapazität, welche sich bei der Änderung des Abstands zwischen Werkzeug und Werkstück ändert.

Es wird bevorzugt, dass das Dielektrikum sowohl mit dem Werkzeugkopf, als auch mit dem Verbindungselement in Kontakt ist. Zweckmäßig ist das Dielektrikum eine am Werkzeugkopf oder am Verbindungselement angebrachte Isolierschicht. Dabei wird bevorzugt, dass das Verbindungselement den Werkzeugkopf zumindest teilweise umgreift. Gemäß bevorzugter Ausführungsformen kann das Verbindungselement eine auf den Werkzeugkopf aufgeklemmte Klemme, ein um den Werkzeugkopf umlaufendes Metallband oder eine über den Werkzeugkopf geschobene Hülse sein.

Vorzugsweise ist das Verbindungselement mittels einer Verbindungsleitung an die Auswerteeinheit angeschlossen, wobei die Verbindungsleitung zumindest abschnittsweise starr ist. Wenn sich die Verbindungsleitung gegenüber dem Bearbeitungswerkzeug nicht oder nur wenig bewegen kann, bleibt die zweite Kapazität auch dann im Wesentlichen konstant, wenn äußere Kräfte auf die Verbindungsleitung wirken.

Im Folgenden wird die Erfindung anhand eines in der Zeichnung schematisch dargestellten Ausführungsbeispiels näher erläutert. Es zeigen

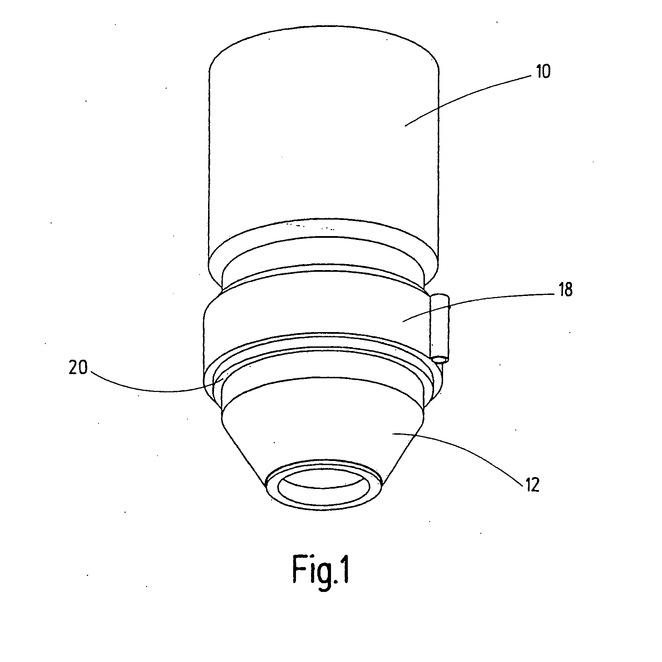

Fig. 1 eine schematische Darstellung eines Endabschnitts eines Plasmaschneidbrenners in perspektivischer Ansicht;

Fig. 2 einen Längsschnitt durch den Schneidbrenner gemäß Fig. 1 mit schematisch dargesteller Auswerteeinheit und

Fig. 3 ein Verbindungselement.

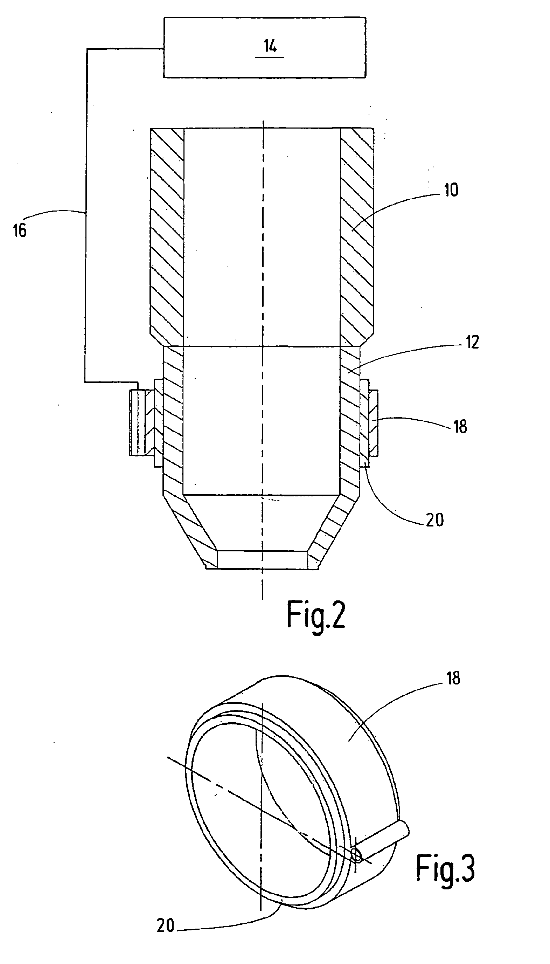

Ein Plasmaschneidbrenner 10, der als Bearbeitungswerkzeug zum Schneiden von Blechen dient und mittels einer in der Zeichnung nicht gezeigten Antriebseinrichtung beweglich ist, weist als Werkzeugkopf eine von seinen übrigen Bauteilen elektrisch isolierte Düsenkappe 12 auf, die mit dem zu schneidenden Blech eine erste Kapazität bildet. Die Änderung der ersten Kapazität, die abhängig von einer Abstandsänderung zwischen der Düsenkappe 12 und dem Blech ist, wird von einer Auswerteeinheit 14 erfasst. Diese weist einen elektrischen Schwingkreis sowie eine Datenverarbeitungseinheit auf, die die Resonanzfrequenz des Schwingkreises auswertet. Über eine Verbindungsleitung 16 ist die erste Kapazität parallel zum Schwingkreis geschaltet. Die Verbindungsleitung 16 ist jedoch nicht direkt an die Düsenkappe 12 angeschlossen. Sie ist vielmehr an einem um die Düsenkappe 12 umlaufenden Metallband 18 befestigt. Das Metallband 18 (Fig. 3) weist an seiner Innenseite eine Schicht eines Dielektrikums 20 auf, die umlaufend eine gleichmäßige Dicke aufweist. Durch das auf die Düsenkappe 12 aufgeklebte oder mittels des Metallbands klemmend gehaltene Dielektrikum 20 wird das Metallband 18 im konstanten Abstand zur Düsenkappe 12 gehalten. Das Metallband 18 und die Düsenkappe 12 bilden somit eine zweite Kapazität, die mit der ersten Kapazität in Reihe geschaltet ist. Durch das Dielektrikum 20 ist die zweite Kapazität deutlich größer als die erste Kapazität. Die Verbindungsleitung 16 ist zumindest über einen Teil ihrer Länge starr, so dass sie sich in Bezug auf das Bearbeitungswerkzeug 10 nicht oder nur wenig bewegen kann.

Zusammenfassend ist folgendes festzuhalten: Die Erfindung betrifft eine Vorrichtung zum Bearbeiten, insbesondere zum Schneiden, von elektrisch leitfähigen Werkstücken mit einem Bearbeitungswerkzeug 10, das mittels einer Antriebseinrichtung zu einem Werkstück hin- und von diesem wegbeweglich ist und das einen elektrisch isolierten, metallischen Werkzeugkopf 12 aufweist, der mit dem Werkstück eine erste Kapazität $C_1$ bildet, und mit einer Auswerteeinheit 14 zur Auswertung einer von der ersten Kapazität $C_1$ abhängigen Kenngröße. Erfindungsgemäß ist vorgesehen, dass am Werkzeugkopf 12 ein metallisches Verbindungselement 18 befestigt ist, das mit der Auswerteeinheit 14 verbunden ist und das mit dem Werkzeugkopf 12 eine zweite Kapazität $C_2$ bildet.

## Patentansprüche

1. Vorrichtung zum Bearbeiten, insbesondere zum Schneiden, von elektrisch leitfähigen Werkstücken mit einem Bearbeitungswerkzeug (10), das mittels einer Antriebseinrichtung zu einem Werkstück hin- und von diesem wegbeweglich ist und das einen elektrisch isolierten, metallischen Werkzeugkopf (12) aufweist, der mit dem Werkstück eine erste Kapazität ($C_1$) bildet, und mit einer Auswerteeinheit (14) zur Auswertung einer von der ersten Kapazität ($C_1$) abhängigen Kenngröße, **dadurch gekennzeichnet, dass** am Werkzeugkopf (12) ein metallisches Verbindungselement (18) befestigt ist, das mit der Auswerteeinheit (14) verbunden ist und das mit dem Werkzeugkopf (12) eine zweite Kapazität ($C_2$) bildet und dass die zweite Kapazität ($C_2$) mit der ersten Kapazität ($C_1$) in Reihe geschaltet ist.

2. Vorrichtung nach Anspruch 1, **dadurch gekennzeichnet, dass** die Auswerteeinheit (14) einen zur ersten und zweiten Kapazität ($C_1$,$C_2$) parallel geschalteten elektrischen Schwingkreis sowie eine Datenverarbeitungseinheit zur Auswertung der Resonanzfrequenz des Schwingkreises aufweist.

3. Vorrichtung nach Anspruch 1, **dadurch gekennzeichnet, dass** die Auswerteeinheit (14) eine elektrische Spannungsquelle sowie eine Datenverarbeitungseinheit zur Auswertung einer Be- und/oder Entladezeit der beiden Kapazitäten ($C_1$,$C_2$) aufweist.

4. Vorrichtung nach einem der vorangehenden Ansprüche, **dadurch gekennzeichnet, dass** zwischen dem Werkzeugkopf (12) und dem Verbindungselement (18) ein Dielektrikum (20) angeordnet ist.

5. Vorrichtung nach Anspruch **4, dadurch gekennzeichnet, dass** das Dielektrikum (20) mit dem Werkzeugkopf (12) und dem Verbindungselement (18) in Kontakt ist.

6. Vorrichtung nach Anspruch 4 oder 5, **dadurch gekennzeichnet, dass** das Dielektrikum (20) eine am Werkzeugkopf (12) oder am Verbindungselement (18) angebrachte Isolierschicht ist.

7. Vorrichtung nach einem der vorangehenden Ansprüche, **dadurch gekennzeichnet, dass** das Verbindungselement (18) den Werkzeugkopf (12) zumindest teilweise umgreift.

8. Vorrichtung nach Anspruch 7, **dadurch gekennzeichnet, dass** das Verbindungselement eine auf den Werkzeugkopf (12) aufgeklemmte Klemme ist.

9. Vorrichtung nach Anspruch 7, **dadurch gekennzeichnet, dass** das Verbindungselement ein um den Werkzeugkopf (12) umlaufendes Metallband (18) ist.

10. Vorrichtung nach Anspruch 7, **dadurch gekennzeichnet, dass** das Verbindungselement eine über den Werkzeugkopf (12) geschobene Hülse ist.

11. Vorrichtung nach einem der vorangehenden Ansprüche, **dadurch gekennzeichnet, dass** das Verbindungselement (18) mittels einer Verbindungsleitung (16) an die Auswerteeinheit (14) angeschlossen ist, wobei die Verbindungsleitung (16) zumindest abschnittsweise starr ist.

## Claims

1. Apparatus for processing, in particular cutting, electrically conductive workpieces using a processing tool (10), which is movable by means of a drive device towards a workpiece and away from the same and which comprises an electrically isolated, metallic tool head (12), which forms a first capacity ($C_1$) with the workpiece and an evaluation unit (14) for evaluating a parameter depending on the first capacity ($C_1$), **characterised in that** a metallic connecting element (18) is secured to the tool head (12), which connecting element (18) is connected to the evaluation unit (14) and which forms a second capacity ($C_2$) with the tool head (12) and **in that** the second capacity ($C_2$) is connected in series to the first capacity ($C_1$).

2. Apparatus according to Claim 1, **characterised in that** the evaluation unit (14) comprises an electrical resonant circuit connected in parallel to the first and second capacity ($C_1$, $C_2$) as well as a data processing unit for the evaluation of the resonance frequency of the resonant circuit.

3. Apparatus according to Claim 1, **characterised in that** the evaluation unit (14) comprises an electrical voltage source as well as a data processing unit for the evaluation of a charging and/or discharging time for both capacities ($C_1$, $C_2$).

4. Apparatus according to any one of the preceding claims, **characterised in that** a dielectric (20) is arranged between the tool head (12) and the connecting element (18).

5. Apparatus according to Claim 4, **characterised in that** the dielectric (20) is in contact with the tool head (12) and the connecting element (18).

6. Apparatus according to Claim 4 or 5, **characterised in that** the dielectric (20) is an isolating layer attached to the tool head (12) or the connecting element (18).

7. Apparatus according to any one of the preceding claims, **characterised in that** the connecting element (18) at least partially encompasses the tool head (12).

8. Apparatus according to Claim 7, **characterised in that** the connecting element is a clamp which is clamped to the tool head (12).

9. Apparatus according to Claim 7, **characterised in that** the connecting element is a metal strip (18) running circumferentially around the tool head (12).

10. Apparatus according to Claim 7, **characterised in that** the connecting element is a sleeve pushed over the tool head (12).

11. Apparatus according to any one of the preceding claims, **characterised in that** the connecting element (18) is connected to the evaluation unit by means of a connecting line (16), the connecting line (16) being rigid at least in sections.

## Revendications

1. Dispositif dévolu à l'usinage, en particulier au découpage de pièces électriquement conductrices, comprenant un outil d'usinage (10) qui peut être rapproché d'une pièce et éloigné de cette dernière au moyen d'un système d'entraînement, et est pourvu d'une tête métallique (12) isolée électriquement et formant un premier condensateur ($C_1$) avec ladite pièce ; et une unité d'évaluation (14) conçue pour évaluer une grandeur caractéristique dépendant dudit premier condensateur ($C_1$), **caractérisé par le fait qu'**un élément métallique de liaison (18), fixé à la tête (12) de l'outil, est raccordé à l'unité d'évaluation (14) et forme un second condensateur ($C_2$) avec ladite tête (12) de l'outil ; et **par le fait que** ledit second condensateur ($C_2$) est branché en série avec le premier condensateur ($C_1$).

2. Dispositif selon la revendication 1, **caractérisé par le fait que** l'unité d'évaluation (14) présente un circuit électrique oscillant, branché en parallèle avec les premier et second condensateurs ($C_1$, $C_2$), ainsi qu'une unité de traitement de données qui est affectée à l'évaluation de la fréquence de résonance dudit circuit oscillant.

3. Dispositif selon la revendication 1, **caractérisé par le fait que** l'unité d'évaluation (14) comporte une source de tension électrique, ainsi qu'une unité de traitement de données qui est affectée à l'évaluation d'un temps de charge et/ou de décharge des deux condensateurs ($C_1$, $C_2$).

4. Dispositif selon l'une des revendications précédentes, **caractérisé par le fait qu'**un diélectrique (20) est interposé entre la tête (12) de l'outil et l'élément de liaison (18).

5. Dispositif selon la revendication 4, **caractérisé par le fait que** le diélectrique (20) est en contact avec la tête (12) de l'outil et avec l'élément de liaison (18).

6. Dispositif selon la revendication 4 ou 5, **caractérisé par le fait que** le diélectrique (20) est une couche isolante déposée sur la tête (12) de l'outil ou sur l'élément de liaison (18).

7. Dispositif selon l'une des revendications précédentes, **caractérisé par le fait que** l'élément de liaison (18) ceinture au moins partiellement la tête (12) de l'outil.

8. Dispositif selon la revendication 7, **caractérisé par le fait que** l'élément de liaison est une borne agriffée sur la tête (12) de l'outil.

9. Dispositif selon la revendication 7, **caractérisé par**

**le fait que** l'élément de liaison est un ruban métallique (18) enlaçant la tête (12) de l'outil.

10. Dispositif selon la revendication 7, **caractérisé par le fait que** l'élément de liaison est une douille enfilée sur la tête (12) de l'outil.

11. Dispositif selon l'une des revendications précédentes, **caractérisé par le fait que** l'élément de liaison (18) est connecté à l'unité d'évaluation (14) au moyen d'un conducteur de jonction (16), ledit conducteur de jonction (16) étant rigide, au moins par zones.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004042135 A1